# EUROPEAN PATENT APPLICATION

(11) **EP 2 925 005 A1**
(43) Date of publication of application: **30.09.2015**
(21) Application number: 15159753.1
(22) Date of filing: 18.03.2015
(51) Int. Cl.: H04N 21/422, H04N 21/4223, H04N 21/431, H04N 21/4415, G06F 3/048

(54) **Display apparatus and user interaction method thereof**

(30) Priority: 27.03.2014 KR 20140036272
(71) Applicant: Samsung Electronics Co., Ltd, Gyeonggi-do 443-742 (KR)
(72) Inventor: Lee, Ji-yeon, Seoul (KR); Moon, Ji-bum, Seoul (KR); Yoo, Ha-yeon, Gyeonggi-do, (KR); Lee, Jun-woo, Seoul (KR)
(74) Representative: Appleyard Lees

(57) **Abstract**

A display apparatus and an interaction method thereof are provided. The display apparatus includes a microphone configured to receive speech from a user, a camera configured to capture an image of the user, a storage configured to store registered user information, and a controller configured to recognize whether the user is a registered user stored in the storage using at least one of the image of the user captured by the camera and speech of the user received by the microphone, and in response to recognizing the user is the registered user, perform a control operation that matches at least one of the speech of the user and a user motion included in the captured image of the user.

## Description

### CROSS-REFERENCE TO RELATED APPLICATION(S)

This application claims priority from Korean Patent Application No. 10-2014-0036272, filed on March 27, 2014 in the Korean Intellectual Property Office, the disclosure of which is incorporated herein by reference in its entirety.

### BACKGROUND

### Field

Apparatuses and methods consistent with the exemplary embodiments relate to a display apparatus and a user interaction method thereof, and more particularly, to a display apparatus and a user interaction method thereof, for recognizing a user using voice and motion.

### Description of Related Art

By virtue of the development of electronic technologies, various types of electronic devices have been developed. A representative example of an electronic device is a display apparatus such as a television (TV), a phone, a computer, and the like. Because a TV has a large display size, a user typically watches the TV while being spaced apart from the TV by a predetermined distance or more. In this case, a remote controller may be used to control an operation of the TV.

However, because of its small size a remote controller often gets lost. In addition, when user interaction is performed using a remote controller, it is cumbersome to input required information while manipulating a direction button, a number button, a confirmation button, and the like, several times to input a single command.

For example, for a user to login, a display apparatus displays a user interface (UI) image which may be used to input a user identification (ID) and a password. The user has to directly input the user ID and the password using a remote controller. However, it is cumbersome to manually input the user ID and the password, and this sensitive information is easily exposed to unspecified people. Furthermore, a remote controller is limited in performing various control operations as well as a login operation. Accordingly, there is a need for a technology that allows a user to more conveniently and effectively perform user interaction without a remote controller.

### SUMMARY

Exemplary embodiments overcome the above disadvantages and other disadvantages not described above. Also, an exemplary embodiment is not required to overcome the disadvantages described above, and an exemplary embodiment may not overcome any of the problems described above.

According to the present invention there is provided an apparatus and method as set forth in the appended claims. Other features of the invention will be apparent from the dependent claims, and the description which follows.

One or more exemplary embodiments provide a display apparatus for user interaction and a user interaction method thereof which recognize a user using a voice and motion.

According to an aspect of an exemplary embodiment, there is provided a display apparatus including a microphone configured to receive speech from a user, a camera configured to capture an image of the user, a storage configured to store registered user information, and a controller configured to recognize whether the user is a registered user stored in the storage using at least one of the image of the user captured by the camera and the speech of the user received by the microphone, and in response to recognizing the user is the registered user, perform a control operation that matches at least one of the speech of the user and a user motion included in the image of the user.

In response to the speech being received by the microphone, the controller may detect feature of the speech, compare the detected feature with voice information of the registered user information stored in the storage, and determine that the user is the registered user when the detected feature matches the voice information stored in the storage.

In response to the image being captured by the camera, the controller may detect user feature information from the captured image, compare the user feature information with feature information of the registered user information stored in the storage, and determine that the user is the registered user when the user feature information matches the feature information if the registered user information stored in the storage.

The controller may perform a user login operation and a turn-on operation in response to a user motion and speech for turning on the display apparatus being input from the registered user while the display apparatus is turned off.

The microphone may be maintained in an enabled state and the camera may be maintained in a disabled state when the display apparatus is turned off, and the controller may determine whether the speech is that of the registered user in response to the speech being received by the microphone while the display apparatus is turned off, enable the camera, and photograph the user when the speech is of the registered user, and analyze the image captured by the camera to detect the user motion.

The display apparatus may further include a display configured to display a suggested pattern of motion for guiding the user motion, and the controller may render a graphic object of the suggested pattern of motion according to a motion of the user.

The control operation may include at least one of a turn-on operation for turning on the display apparatus, a turn-off operation for turning off the display apparatus, a user login operation, a mute operation for stopping an audio signal, and a snooze operation for stopping an alarm and resetting the alarm.

The camera may be maintained in an enabled state and the microphone may be maintained in a disabled state when the display apparatus is turned off, and the controller may analyze the image when the image captured while the display apparatus is turned off, enable the microphone, and receive the speech in response to the user motion being detected from the captured image.

The display apparatus may further include a speaker, and the controller may output an alarm signal through the speaker in response to a predetermined alarm time being reached, and stop output of the alarm signal and reset the alarm signal according to a next alarm time in response to an undo motion being input and speech indicating the next alarm time being input from the registered user.

The display apparatus may further include a communicator configured to communicate with an external device, wherein at least one of the microphone and the camera are installed in the external device, and the communicator may receive at least one of the image captured by the camera and the speech input through the microphone from the external device.

According to an aspect of another exemplary embodiment, there is provided a user interaction method of a display apparatus includes at least one of receiving speech from a user through a microphone and capturing the image of the user using a camera, recognizing whether the user is a registered user stored in a storage of the display apparatus using at least one of an image captured by the camera and speech received through the microphone, and in response to recognizing the user is the registered user, performing a control operation of the display apparatus that matches at least one of the speech of the user and a user motion from the image.

The recognizing may include, in response to the speech being received, detecting a feature of the speech, comparing the detected feature with previously stored voice information of a registered user, and determining that the user is the registered user when the detected feature matches the previously stored voice information.

The recognizing may include, in response to the image being captured, detecting user feature information from the captured image, comparing the user feature information with previously stored feature information of a registered user, and determining that the user is the registered user when the user feature information matches the previously stored feature information.

The performing may include performing a user login operation and a turn-on operation upon in response to determining that a user motion and speech for turning on the display apparatus is input from the registered user while the display apparatus is turned off.

The microphone may be maintained in an enabled state and the camera may be maintained in a disabled state when the display apparatus is turned off, and the user interaction method may further include enabling the camera in response to the speech of the registered user being input when the display apparatus is turned off.

The user interaction method may further include displaying a suggested pattern of motion for guiding the user motion when the camera is enabled, rendering a graphic object of the suggested pattern of motion according to a motion of the user.

The control operation may include at least one of a turn-on operation for turning on the display apparatus, a turn-off operation for turning off the display apparatus, a user login operation, a mute operation for stopping an audio signal, and a snooze operation for stopping an alarm and resetting the alarm.

The camera may be maintained in an enabled state and the microphone may be maintained in a disabled state when the display apparatus is turned off, and the user interaction method may further include enabling the microphone when the user is photographed while the display apparatus is turned off.

The user interaction method may further include outputting an alarm signal through a speaker when a predetermined alarm time is reached, and stopping the alarm signal and resetting the alarm signal according to a next alarm time in response to an undo motion being input from the registered user and speech indicating the next alarm time being input.

According to an aspect of another exemplary embodiment, there is provided a display apparatus including a microphone configured to receive speech from a user, a camera configured to capture an image of the user, a storage configured to store a predetermined alarm time, a speaker configured to output an alarm signal, and a controller configured to control the speaker to output the alarm signal and control each of the microphone and the camera to transition from a disabled state to an enabled state in response to the alarm time being reached while the display apparatus is turned off.

The controller may stop output of the alarm signal and reset a next alarm time in response to speech including the next alarm time being received through the microphone while the alarm signal is output and an undo motion of the user is detected from an image captured by the camera.

According to an aspect of another exemplary embodiment, there is provided a display apparatus including a receiver configured to receive an image and audio from a user, and a controller configured to determine whether the user is a registered user of the display apparatus based on at least one of a received image and a received audio, and control the display apparatus based on at least one of a user motion included in the received image and an audio command included in the received audio, in response to determining that the user is a registered user.

The controller may be configured to determine whether the user is the registered user based on the received audio.

The controller may be configured to control the display apparatus based on both of the user motion included in the received image and the audio command included in the received audio.

### BRIEF DESCRIPTION OF THE DRAWINGS

The above and/or other aspects will be more apparent by describing certain exemplary embodiments with reference to the accompanying drawings, in which:
FIG. 1 is a diagram illustrating a display apparatus according to an exemplary embodiment;
FIG. 2 is a block diagram illustrating a display apparatus according to an exemplary embodiment;
FIG. 3 is a flowchart illustrating a user interaction method according to an exemplary embodiment;
FIG. 4 is a diagram illustrating a user interacting with a display apparatus according to an exemplary embodiment;
FIG. 5 is a diagram illustrating a suggested pattern of motion according to an exemplary embodiment;
FIG. 6 is a block diagram illustrating a display apparatus according to another exemplary embodiment;
FIG. 7 is a diagram illustrating a display apparatus that uses an external microphone and a camera according to an exemplary embodiment;
FIG. 8 is a block diagram of the display apparatus of FIG. 7 according to an exemplary embodiment;
FIG. 9 is a flowchart illustrating a user interaction method according to another exemplary embodiment;
FIGS. 10 and 11 are diagrams illustrating various embodiments using a snooze function according to exemplary embodiments;
FIG. 12 is a diagram illustrating a user interacting with a display apparatus to perform a mute function according to an exemplary embodiment;
FIG. 13 is a diagram illustrating a voice command registration process according to an exemplary embodiment;
FIG. 14 is a diagram illustrating a user motion registration process according to an exemplary embodiment; and
FIG. 15 is a flowchart for a user interaction method according to an exemplary embodiment.

### DETAILED DESCRIPTION

Certain exemplary embodiments will now be described in greater detail with reference to the accompanying drawings. Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

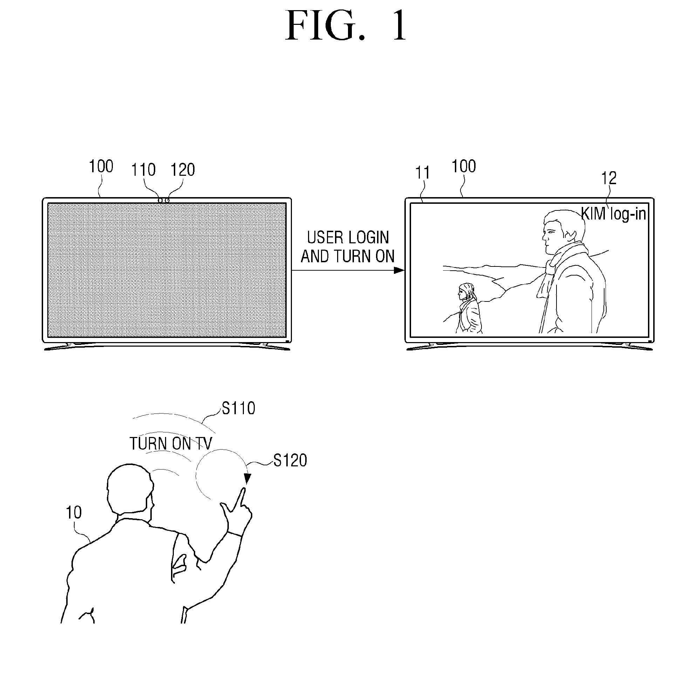

FIG. 1 is a diagram illustrating a display apparatus 100 according to an exemplary embodiment. Referring to FIG. 1, the display apparatus 100 includes a microphone 110 and a camera 120. The display apparatus 100 refers to an apparatus that has or that provides a display function. FIG. 1 illustrates the display apparatus as a TV. However, the display apparatus 100 may be embodied as various types of devices such as a monitor, a laptop personal computer (PC), a kiosk, a set-top box, a mobile phone, a tablet PC, a digital photo frame, an appliance, and the like.

The display apparatus 100 may perform operations corresponding to an audio signal or speech signal spoken by a user and in response to a user motion. The speech signal may include various audio signals such as spoken words or commands, an applause sound, a tapping sound on an object, a finger snap sound, and the like as well as other user vocal commands. That is, the speech signal is not limited to spoken commands only. An example in which a user uses a speech signal is described below.

A user 10 may control an operation of the display apparatus 100 using the audio signal or the motion. The display apparatus 100 may recognize the user 10 and determine whether a control operation is being performed according to the recognition result. For example, user information about specific users may be registered in the display apparatus 100. Accordingly, the display apparatus 100 may recognize whether the user 10 is a registered user using a captured image or voice signal of the user 10.

Accordingly, the display apparatus 100 may perform a control operation corresponding to at least one of the voice signal and the user motion. The control operation may include various operations. For example, the display apparatus 100 may perform a turn-on operation to turn on the display apparatus 100, a turn-off operation to turn off the display apparatus 100, a user log in operation, a mute operation for to mute an audio signal output of content, a snooze operation for stopping an alarm output, a resetting alarm time operation, and the like. As another example, various control operations such as a channel tuning operation, a volume control operation, a text input operation, a cursor moving operation, a menu selection operation, a communication connection operation, a web browser execution operation, and the like, may be executed according to a user motion or voice signal of the registered user..

FIG. 1 illustrates a procedure of performing user login operation and a turn-on operation using voice commands and motion of the user 10. As illustrated in FIG. 1, when the display apparatus 100 is turned off, the user 10 may perform a predetermined motion while speaking a predetermined voice signal. In response, the display apparatus 100 analyzes the voice signal and photographs the user to recognize the user motion. For example, while the user 10 speaks "Turn on the TV" (S110), the user 10 may also make a motion for drawing a circle using fingers in the air (S120).

The display apparatus 100 may recognize a user using at least one of a voice signal and captured image of the user. An example of a recognizing method is further described below.

Upon recognizing a user, the display apparatus 100 may perform a control operation corresponding to a voice command and/or motion of the user. FIG. 1 illustrates the case in which the display apparatus 100 automatically performs a user login operation and a turn-on operation according to a voice signal "Turn on the TV" and a user motion of drawing a circle. It should be appreciated that the voice signal and the user motion may be matched with different respective control operations, or combinations of the voice signal and the user motion may be matched with a plurality of different control operations or a single control operation.

In this example, the display apparatus 100 displays an image 11 and displays an object 12 indicating that the user 10 has logged in at one point in the image 11. FIG. 1 illustrates the object 12 in the form of text. Alternatively, various objects such as an image, an icon, or the like may be used. Although FIG. 1 illustrates the case in which a user login operation is performed together with a turn on operation, only a turn-on operation may be performed without user login when only a turn-on operation is matched with a user motion and/or a voice command.

In response to a voice command or a user motion being input by a non-registered user, the display apparatus 100 may not provide any feedback. Instead, an error message may be displayed or an error indication sound may be output through a speaker. Accordingly, in some examples a non-registered user may not interact with the display apparatus 100 using a motion and a sound.

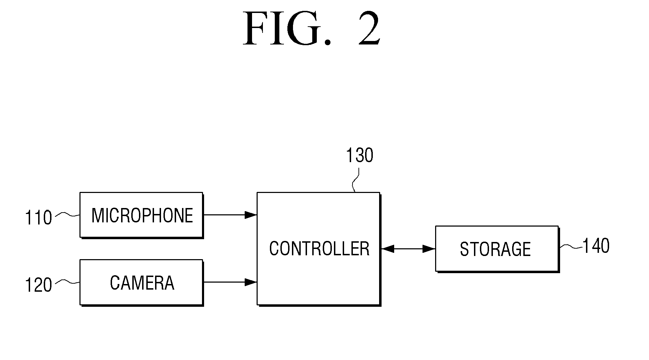

FIG. 2 is a block diagram illustrating the display apparatus 100 of FIG. 1. Referring to FIG. 2, the display apparatus 100 includes the microphone 110, the camera 120, a controller 130, and a storage 140.

The microphone 110 is for receiving various audio signals. For example, the microphone 110 may receive a voice signal or voice command formed by a user. The camera 120 is for photographing or otherwise obtaining an image of a user. The camera 120 may be disposed to face a front side of the display apparatus 100.

Although FIG. 1 illustrates the case in which the microphone 110 and the camera 120 are arranged in parallel at a middle portion of an upper edge portion of the display apparatus 100, the positions, the amounts, and the like of the microphone 110 and the camera 120 may be changed in various ways.

The storage 140 is for storing various programs and data. The storage 140 may store user information of a registered user. For example, the user information may include various pieces of information such as user voice information, face or body feature information, a name, a gender, an age, preferred content, preferred function, and the like.

The storage 140 may store a predetermined audio command and a user motion. The audio command refers to various audio signals or vocal commands for controlling operation of the display apparatus 100. For example, to perform a turn-on operation for turning on the display apparatus 100, voice command "turn on", "turn on the TV", "power on", and the like, may be registered as a voice command.

The user motion refers to motion of a user, a change in facial expressions, and the like. For the turn-on operation, a gesture for drawing a specific shape while showing a palm, a gesture for drawing a specific shape while the display apparatus 100 is directed by a finger, and the like, may be registered as a user motion. In addition, a smile with an open mouth or a stare of the display apparatus 100 for a predetermined period of time may be registered as a user motion.

A voice command and a user motion may be set for a plurality of respective users and registered in the storage 140. A procedure of setting the voice command and the user motion is described below.

The controller 130 may synthetically consider an audio signal input through the microphone 110 and a user motion photographed by the camera 120, recognize a user, and perform a control operation desired by the user.

The user recognition operation may be performed using a voice signal input through the microphone 110 or using an image captured by the camera 120. Alternatively, the user recognition operation may be performed using both the voice signal and the captured image. For vocal commands, the controller 130 may detect frequency and amplitude variation characteristic of the voice signal input through the microphone 110. Accordingly, the controller 130 may compare the detected frequency and amplitude variation characteristic with frequency and amplitude variation characteristic of voice information stored in the storage 140 to determine whether the compared characters match. Because human voice signals have different pronunciations, intonations, speed, and the like, the characteristic of the voice signal may be analyzed to recognize a user of the corresponding voice signal. For example, if the voice characteristic detected by the controller 130 matches the voice information stored in the storage 140 by a predetermined ratio or more, the controller 130 may determine that the detected voice is that of a registered user.

For capture images, the controller 130 may divide the captured image in a pixel block unit and calculate a representative pixel value for each respective pixel block. For example, the representative pixel value may be calculated as an average value of all of the pixels that are included in a pixel block, or a maximum distribution value, an intermediate value, a maximum value, and the like. The controller 130 may compare representative pixel values of pixel blocks and determine whether pixel blocks having a similar range of representative pixel values are consecutively arranged. When enough pixel blocks are consecutively arranged, the controller 130 determines that the pixel blocks constitute an object. For example, the controller 130 may determine whether an object having a similar pixel value range to a user's skin color is present from among pixel blocks determined as an object. When the object is present, the controller 130 may recognize the object as a facial region or other body region of the user and determine the remaining region is a surrounding background.

Upon detecting an object estimated as a user facial region from a captured image, the controller 130 may recognize a user based on a feature of the facial region. For example, the storage 140 may store examples of shapes of facial regions that may be determined via repeated experimental results. The controller 130 may select a facial region based on the data stored in the storage 140.

In response to a facial region being selected, the controller 130 may detect user feature information from the facial region. Examples of the user feature information include a face length, a face width, a distance between eyebrows, a nose length, a lip angle, a face shape, a face size, a face color, an eye size, an eye color, a pupil color, an eye location, an eye angle, an eye shape, a nose size, an ear location, an eyebrow thickness, an eyebrow location, a hair style, a hair color, a clothing color, a clothing shape, a mustache location, a mustache shape, a mustache color, types of glasses, piercings, an ear ring, and the like. The controller 130 may compare pixel values of pixels that form a facial region of a user and detect user feature information according to arrangements of pixels having similar pixel values. The controller 130 may compare feature information to user information stored in the storage 140 and user feature information detected from a captured image to recognize a user.

In order to enhance the accuracy of recognizing a user, the controller 130 may recognize the user using both of the voice signal and the captured image.

Upon recognizing a user, the controller 130 may perform a control operation that matches a voice command of the user and/or a motion of the user. For example, as described with reference to FIG. 1, a login operation and a turn-on operation may be collectively performed. The controller 130 may analyze an audio signal input through the microphone 110 in response to a voice signal being input, and a voice command may be detected. The controller 130 may recognize the voice command using at least one of various recognition algorithms such as a dynamic time warping method, a hidden Markov model, a neural network, and the like, and convert the recognized voice command into a text. In an example using the hidden Markov model, the controller 130 may perform modeling on a temporal variation and a spectrum variation of the voice signal to detect similar words from a pre-stored language database. Accordingly, the detected words may be output as a text. The controller 130 may compare the converted text to voice commands stored in the storage 140 to determine whether the converted text and a voice command match. In response to the converted text and the voice command being matched with each other, the controller 130 may perform a control operation corresponding to the matched text of the voice command.

The controller 130 may analyze the image captured by the camera 120 to recognize a user motion. Although FIG. 1 illustrates only one camera 120, the number of cameras may be changed. The camera 120 may use image sensors such as a complementary metal oxide semiconductor (CMOS), a charge coupled device (CCD), and the like. The camera 120 may provide an image captured using an image sensor to the controller 130. The captured image may include a plurality of photographing frames.

The controller 130 may compare locations of pixels of an object that is present in each photographing frame to determine how a user moves. In response to a user making a gesture similar to a pre-registered user motion, the controller 130 may perform a control operation that matches the user motion.

As another example the user may be identified using facial feature instead of a voice signal. As another example, the user may register a finger snap sound or an applause sound as an audio command instead of speaking a vocal command. In addition, a finger snap action or an applause action may be registered as a user motion. For example, the user may perform a turn-on operation and a login operation by a simple finger snapping sound while looking at the display apparatus 100. In this case, the controller 130 may identify the user based on the facial feature of the user and login to an account of the corresponding user.

As described above, when at least one of a vocal command and facial feature of a user is matched with data pre-stored in the storage 140, the controller 130 may perform a control operation intended by the user.

When a plurality of users are present, each user may register his or her unique account with the display apparatus 100. Each user may register various options such as a preferred channel, audio volume, color, brightness, and the like in his or her account. When user login is performed by user 10, the controller 130 may control an operation of the display apparatus 100 according to an option registered in the user account corresponding to the user 10.

For example, if the display apparatus 100 is turned off, the user may make a predetermined motion and/or issue a predetermined vocal command, and the display apparatus 100 may be automatically turned on and may proceed directly to login. To enable these operations, while the display apparatus 100 is turned off, at least one of the microphone 110 and the camera 120 may be maintained in an enable state. Here, the enable state refers to a state in which power is supplied and a voice input and photograph operations are performed.

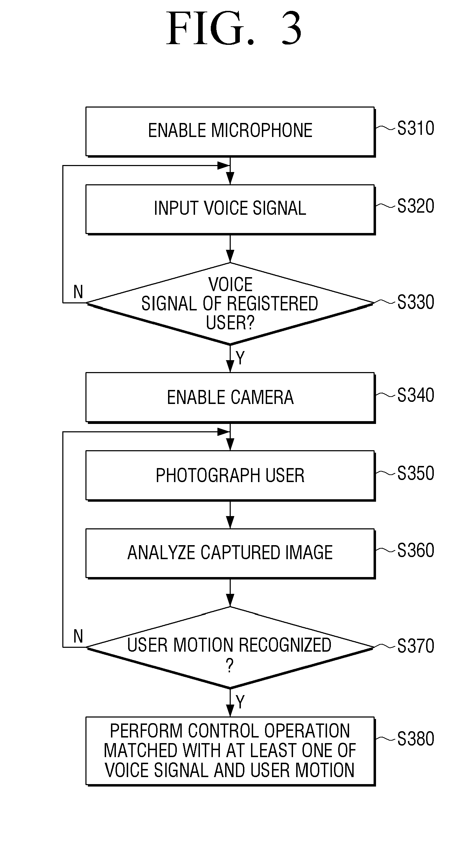

FIG. 3 is a flowchart illustrating a user interaction method according to an exemplary embodiment when microphone 110 is always enabled. Referring to FIG. 3, the display apparatus 100 enables the microphone 110 even if the displays apparatus 100 is turned off (S310). Here, a turn-off state refers to a soft turn-off state in which a power cord is still connected or power is otherwise maintained.

In response to a user inputting speech through the microphone 110 (S320), the voice signal is analyzed and whether the analyzed voice signal is that of a registered user is determined (S330). When the analyzed voice signal is a registered user's voice signal, whether a predetermined voice command is included in the voice signal is determined and the display apparatus 100 enables the camera 120 (S340). To conserve power, when the display apparatus 100 is turned off, the camera 120 may be set to a disable state.

The user is photographed in (S350), and the display apparatus 100 analyzes the captured image (S360) and determines whether a predetermined user motion is input (S370). If it is determined that a user motion is input, the display apparatus 100 performs a control operation matched with at least one of the user voice signal and the user motion (S380). For example, the display apparatus 100 may be automatically turned on and a user login operation may be performed. In addition, as described above, the display apparatus 100 may perform various control operations.

FIG. 3 illustrates an example in which the microphone 110 is first enabled and then the camera 120 is enabled. However, the enabling order may be changed. For example, when the display apparatus 100 is turned off, the camera 120 may be maintained in an enabled state and the microphone 110 may be maintained in a disabled state. In this example, when the user is photographed while the display apparatus 100 is turned off, the controller 130 may analyze the captured image and determine whether a user motion is input from a registered user. If it is determined that the user motion is input from the registered user, the controller 130 may enable the microphone 110.

In response to a voice signal being input through the enabled microphone 110, the controller 130 analyzes the voice signal and detects a voice command. The controller 130 then performs the command, for example, the turn-on operation and a user login operation. According to another embodiment of the present invention, the controller 130 may also further check whether the voice signal is a voice of the registered user based on a voice feature detected during a voice signal analyzing process.

As another example, the microphone 110 and the camera 120 may each be maintained in an enabled state even while the display apparatus 100 is turned off. In this case, a user motion and a voice signal may be simultaneously received and processed.

The display apparatus 100 may further include a proximity detecting sensor for detecting whether a user is present, in addition to the microphone 110 and/or the camera 120. The proximity detecting sensor may detect a user present in front of the display apparatus 100, and the controller 130 may enable at least one of the microphone 110 and the camera 120 and perform the user interaction described herein.

Although FIG. 1 illustrates the case in which a voice signal and a user motion are simultaneously input, the voice signal and the user motion may be sequentially input. For example, as described with reference to FIG. 3, when the display apparatus 100 is turned off and only the microphone 110 is enabled, the user motion may not be input. Thus, the user may first input the voice signal and then input the motion. To assist the user, the display apparatus 100 may display a suggested pattern of motion to assist the user.

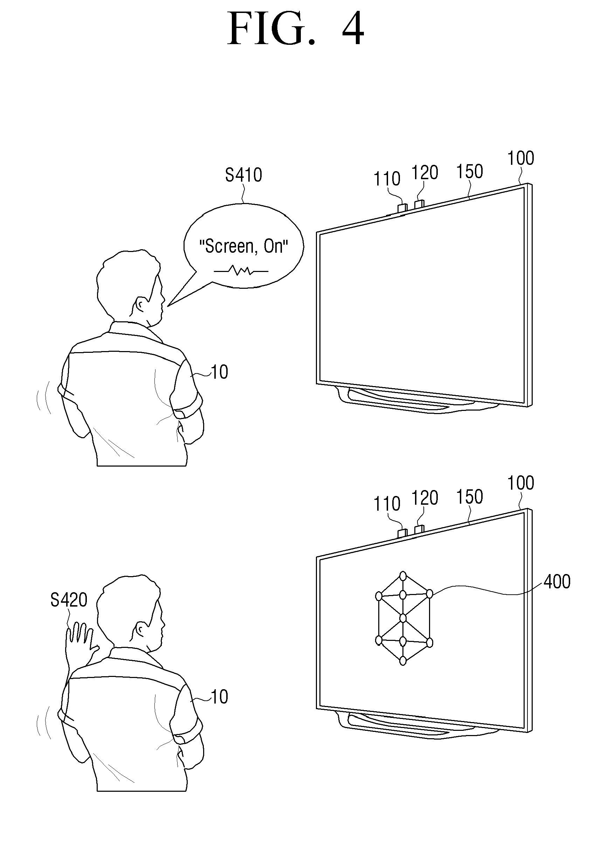

FIG. 4 is a diagram illustrating a user interacting with a display apparatus according to an exemplary embodiment. Referring to FIG. 4, in response to a voice signal being input by the user 10 (S410), the display apparatus 100 receives and analyzes the voice signal. The display apparatus 100 may determine that a registered user issues a voice command, and the controller 130 of the display apparatus 100 may enable the camera 120 and display the suggested pattern 400 of motion on a display 150. The suggested pattern 400 is a pattern for guiding the user to make a pattern of motion corresponding to a command. The user may see the displayed pattern 400 and may intuitively recognize the fact that a voice signal of the user is normally input and the fact that the user needs to input a specific pattern of motion.

For example, when the user 10 puts his or her hand up and inputs a predetermined motion (S420), the controller 130 may render a graphic object on the pattern 400 according to a user motion.

Although FIG. 4 illustrates an example in which a registered user inputs a voice signal and a motion, the display apparatus 100 may not transmit a feedback or perform a command when a non-registered user issues a voice command or motion command, as described above.

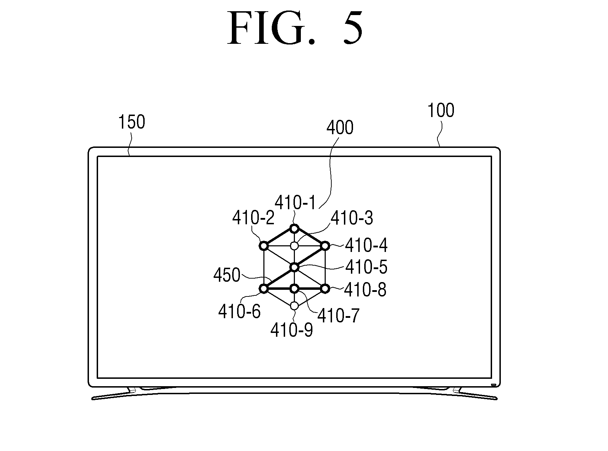

FIG. 5 is a diagram illustrating a suggested pattern 400 of motion. Referring to FIG. 5, the suggested pattern 400 includes a plurality of circular objects 410-1 to 410-9 and lines connecting them. A user may make a motion by drawing a pattern in the air using a body portion, for example, a finger, a palm, and the like, used for user motion registration. The controller 130 analyzes a user motion photographed by the camera 120 and renders a graphic line 450 in this example connecting some of the circular objects according to the motion. FIG. 5 illustrates a case in which a pattern similar to the number '2' is rendered along second, first, fourth, fifth, sixth, seventh, and eighth circular objects 410-2, 410-1, 410-4, 410-5, 410-6, 410-7, and 410-8. It should be appreciated that the type and shape of the pattern may be set in various ways according to user registration.

In order to prevent misrecognition of a user motion, a start point for rendering the graphic line 450 may be fixed as one circular object. For example, the first circular object 410-1 may be fixed. Accordingly, if the user makes a motion with his or her hand upwards and draws a circle clockwise, the controller 130 may render the graphic line 450 along circular objects 410-4, 410-8, 410-9, 410-6, and 410-2 that are arranged clockwise from the first circular object 410-1 corresponding to the motion of the user with respect to the fixed circular object 410-1.

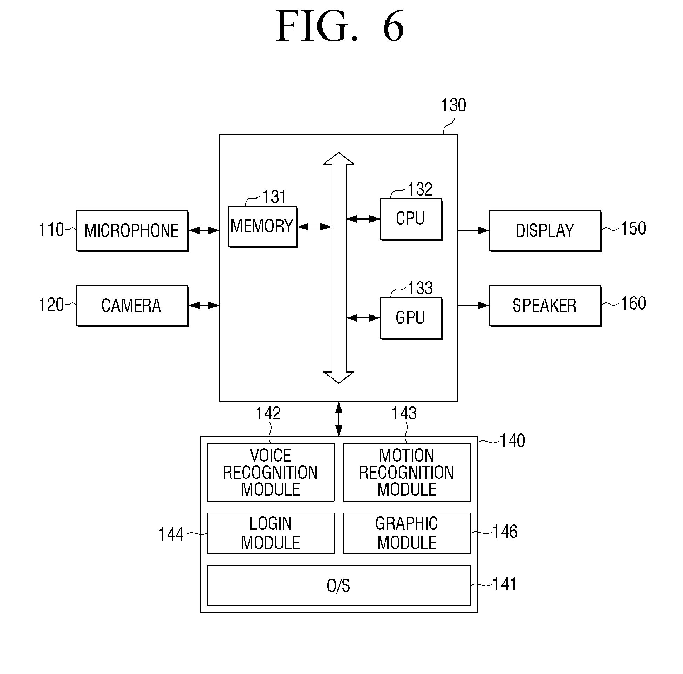

FIG. 6 is a block diagram illustrating a display apparatus 100 according to another exemplary embodiment. Referring to FIG. 6, the display apparatus 100 includes the microphone 110, the camera 120, the controller 130, a speaker 160, and the display 150. The microphone 110 and the camera 120 are described with reference to FIG. 2 and thus additional description thereof is not repeated here.

The display 150 is for displaying various images. The speaker 160 is for outputting various audio signals. The display apparatus 100 may receive a broadcast signal and output broadcast content. Here, the display 150 displays a broadcast content image and the speaker 160 outputs an audio signal synchronized with the broadcast content image. To process broadcast content or other contents, the display apparatus 100 may include various components such as a tuner, a demultiplexer, a video decoder, an audio decoder, a filter, an amplifier, and the like.

The controller 130 may provide the user interface described herein using various programs and data stored in the storage 140. For example, the storage 140 may store various software such as an operating system (OS) 141, a voice recognition module 142 (or speech recognition module), a motion recognition module 143, a login module 144, a graphic module 146, and the like.

The OS 141 is a layer that performs a basic function of hardware management, a memory, security, and the like. The OS 141 may drive various modules such as a display driver for the display 150, a communication driver, a camera driver, an audio driver, a power manager, and the like, to control an operation of the display apparatus 100.

The voice recognition module 142 may analyze an audio signal input through the microphone 110 to recognize a user and detect a predetermined audio command through vocal recognition. The motion recognition module 143 may analyze an image captured by the camera 120 to recognize the user and detecting a user motion.

The login module 144 may perform a login operation for a user corresponding to predetermined data when the recognition result of the voice recognition module 142 and the motion recognition module 143 match with the predetermined data. The graphic module 146 may render various graphic objects on the display 150.

The controller 130 may perform various operations using various modules stored in the storage 140. The controller 130 includes a memory 131, a central processing unit (CPU) 132, and a graphic processing unit (GPU) 133.

The memory 131 may include a random access memory (RAM), a read only memory (ROM), and the like. The CPU 132 copies various programs stored in the storage 140 to the memory 131 and executes the programs. Accordingly, the aforementioned operations may be performed.

The GPU 133 generates various images displayed on the display apparatus 100. For example, as described with reference to FIG. 4, when a user voice signal is detected, the GPU 133 may execute the graphic module 146 to display a suggested pattern of motion. Although FIG. 6 illustrates the case in which the GPU 133 is included in the controller 130, in other examples the GPU 133 may be provided as a separate component.

The microphone 110 and the camera 120 may be installed in the display apparatus 100. As another example, one or more of the microphone 110 and the camera 120 may be provided as separate devices outside the display apparatus 100.

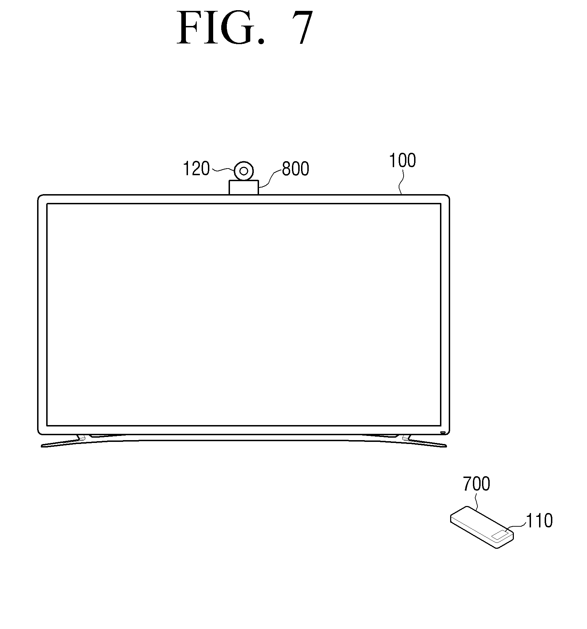

FIG. 7 is a diagram illustrating a display apparatus 100 that uses an external microphone and a camera. Referring to FIG. 7, the display apparatus 100 may interwork with various external devices such as a remote controller 700, a camera device 800, and others not shown. An external device may include the microphone 110 and the camera 120 formed therein. For example, the microphone 110 may be installed in the remote controller 700 and the camera 120 may be installed in the camera device 800. If the remote controller 700 is positioned close to a user in comparison with the display apparatus 100, and the microphone 110 is installed in the remote controller 700, a user voice may be more clearly and accurately recognized at the remote controller 700. When a user voice signal is input through the microphone 110, the remote controller 700 may transmit the input voice signal to the display apparatus 100. As another example, the remote controller 700 may have a speech recognition function. In this example, the remote controller 700 may transmit a control signal corresponding to the recognized speech instead of transmitting the voice signal. For example, a turn-on signal may be transmitted.

As an example, a user may install the camera device 800 somewhere around the display apparatus 100 that faces a user direction. The camera device 800 may include the camera 120 and a communication interface (not shown). Thus an image captured by the camera 120 may be transmitted to the display apparatus 100 through the communication interface.

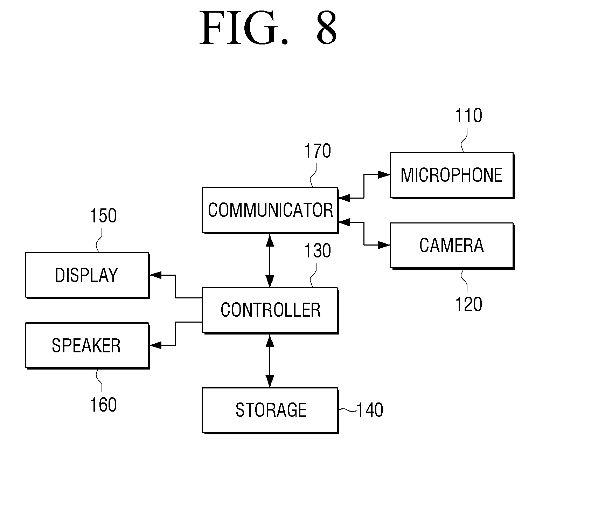

FIG. 8 is a block diagram of the display apparatus of FIG. 7 according to an exemplary embodiment. Referring to FIG. 8, the display apparatus 100 includes a communicator 170 installed therein for communicating with an external device such as the microphone 110, the camera 120, and the like. The communicator 170 may transmit a voice signal input through the microphone 110 and an image captured by the camera 120 to the controller 130. The communicator 170 may communicate through various communication schemes. For example, the communicator 170 may transmit and receive data via various wireless communication methods such as Bluetooth, WiFi, ZigBee, near field communication (NFC), and the like, or via various serial interfaces such as a universal serial bus (USB), and the like. Although FIGS. 7 and 8 illustrate an example in which both the microphone 110 and the camera 120 are installed as external devices, it should also be appreciated that only one of these components may be installed as the external device. It should also be appreciated that the display apparatus 100 may perform various control operations in addition to user login and turn-on operations.

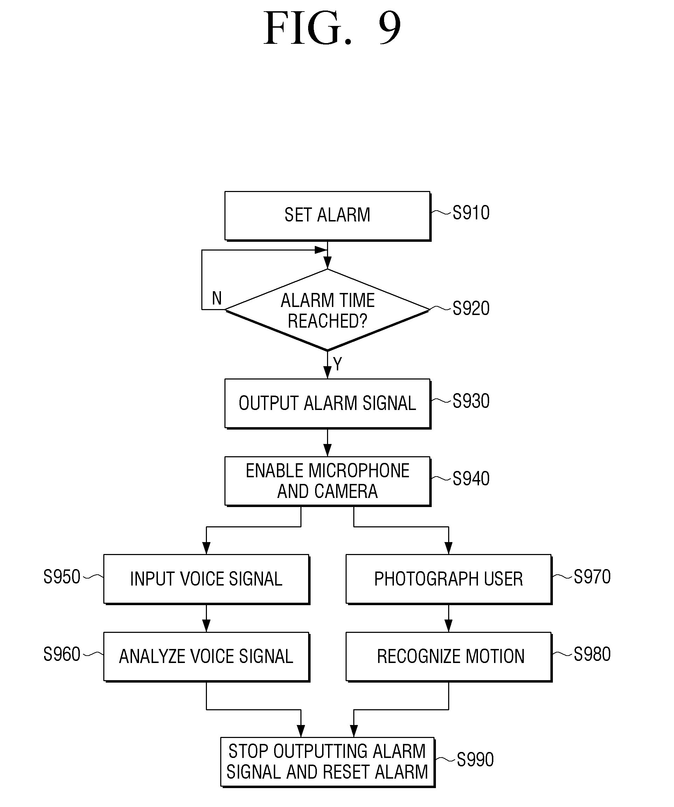

FIG. 9 is a flowchart illustrating a user interaction method according to an exemplary embodiment. Referring to FIG. 9, the display apparatus 100 stores an alarm time in response to a user setting the alarm time (S910). In this case, when the alarm time is reached (S920), the display apparatus 100 outputs an alarm signal (S930). The alarm signal may include an audio signal and also include an audio signal and a video signal.

The display apparatus 100 enables a microphone and a camera while outputting an alarm signal (S940). For example, the microphone and the camera may be enabled separately or simultaneously. A user voice signal is input using the enabled microphone 110 (S950), and the voice signal is analyzed (S960). In addition, a user is photographed using the enabled camera 120 (S970), and a user motion is recognized (S980).

The display apparatus 100 may recognize the user using at least one of a user voice signal and a user motion. Accordingly, the user may be recognized as a registered user, and an operation such as the snooze operation may be performed according to the voice signal and the user motion.

Next, the user motion is matched with a predetermined user motion, and the display apparatus 100 stops outputting an alarm signal and resets the alarm according to the user voice signal (S990). For example, the user may input the voice signal "after 10 minutes", and a point of time 10 minutes later may be set as a next alarm time.

The user interaction method of FIG. 9 may be embodied as a separate embodiment from the other exemplary embodiments or may be combined together with at least one of the other exemplary embodiments. For example, the user interaction method of FIG. 9 may be combined with the example of FIG. 3, and if the display apparatus 100 is turned off, the microphone 110 may be maintained in an enabled state and the camera 120 may be maintained in a disabled state. In this example, when the alarm time is reached, only the microphone 110 is enabled initially. Accordingly, and the snooze function may be executed according to the user voice signal as described with reference to FIG. 9. Similarly, the snooze function may be executed when only the camera 120 is enabled.

When one or more of the microphone 110 and the camera 120 are enabled, and the alarm time is reached, operation S940 of enabling the microphone 110 and/or the camera 120 may be omitted.

As described with reference to FIG. 1, when a user login is already achieved, the display apparatus 100 may omit a user recognition process for a voice signal and a user motion for a snooze operation.

On the other hand, when the user interaction method of FIG. 9 is separately embodied from the other exemplary embodiments, the display apparatus 100 may be embodied as including the microphone 110, the camera 120, the controller 130, the storage 140, and the speaker 160. In this case, the storage 140 may store a predetermined alarm time. When the display apparatus 100 is turned off, and the alarm time is reached, the controller 130 may output an alarm signal through the speaker 160 and enable each of the microphone 110 and the camera 120. While the alarm signal is being output, a voice signal representing a next alarm time may be input from a registered user through the microphone 110 and an undo motion may be detected from an image captured by the camera 120. Accordingly, the controller 130 may stop outputting the alarm signal and reset the next alarm time.

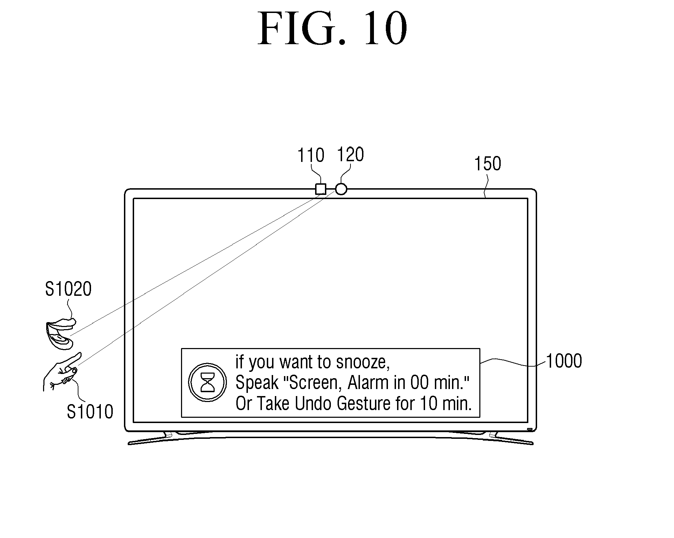

FIG. 10 is a diagram illustrating an example of a message displayed on the display apparatus 100 during output of alarm according to an exemplary embodiment. Referring to FIG. 10, an alarm time set by a user is reached, and the display apparatus 100 displays a message 1000 for guidance of a snooze function on the display 150 while outputting an alarm signal. The user may input an undo motion according to guidance of the message 1000 (S1010) and input a voice signal including a next alarm time (S1020).

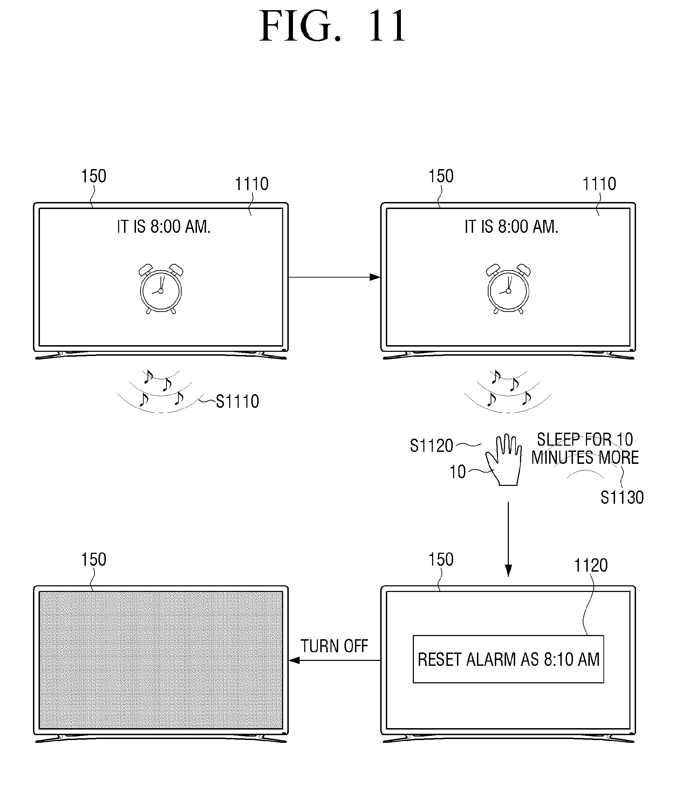

FIG. 11 is a diagram illustrating execution of a snooze function according to an exemplary embodiment. Referring to FIG. 11, when an alarm time is reached, the display apparatus 100 simultaneously outputs an alarm signal through the speaker 160 while displaying an alarm image 1110 on the display 150 (S1110). In this example, an alarm time is set as 8:00 AM. While inputting an undo motion of stretching a palm towards the display apparatus 100 (S1120), and a user inputs a vocal command "sleep for 10 minutes more" (S1130), the controller 130 stops outputting the alarm signal upon determining that an undo motion of a registered user is input.

In addition, upon determining that the voice signal of the registered user is input, the controller 130 analyzes the voice signal and extracts a keyword. For example, the keyword "10" is extracted, and the controller 130 sets a time of 10 minutes later as a next alarm time. In FIG. 11, 8:10 is the next alarm time. When the next alarm time is set, the controller 130 displays a message 1120 indicating this and then alarm is converted into a stand-by state until the next alarm time is reached. The stand-by state may be a state in which the display apparatus 100 is turned off but is not limited thereto. When the next alarm time is reached, the controller 130 may re-output the alarm signal. In this case, the snooze function may be re-used.

When the user does not speak a specific point of time and inputs a voice signal indicating a snooze function together with an undo motion, the controller 130 may reset a next alarm time using a predetermined reference time unit. For example, the user may speak the vocal command "I want to sleep more." In this example, five minutes may be set as a reference unit time, and the controller 130 may reset 8:05 as a next alarm time.

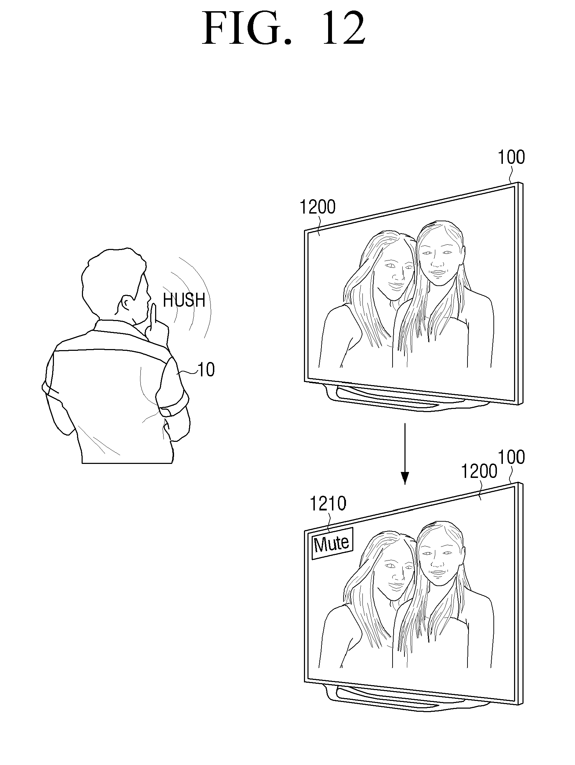

In addition, a multimodal interaction method may also be used for a mute function in addition to the snooze function. FIG. 12 is a diagram illustrating a user performing a mute function.

Referring to FIG. 12, in response to an audio signal being input together with a motion by the user 10 while the display apparatus 100 outputs moving picture content 1200, the display apparatus 100 may determine whether the user 10 is a registered user. The display apparatus 100 may recognize a user using a vocal command or a facial feature, and the like, as described above. Upon determining that the user 10 is a registered user, the display apparatus 100 may perform a mute operation and stop an audio signal from being output. For convenience of description, a user motion matched with a mute operation is referred to as a mute motion and a voice command that matched with a mute operation is referred to as a mute command.

FIG. 12 illustrates an example in which the mute motion is a motion of moving a finger towards the middle of the mouth of the user and the mute command is set as "hush". In response to both the mute motion and the mute command being input, the controller 130 of the display apparatus 100 controls a speaker to stop audio signal output. The controller 130 may display a graphic object 1210 indicating that the mute function is being executed on content 1200.

The mute motion and the mute command may be set in various ways. For example, a motion of moving two fingers from one end of a lip to the other end while shutting the two fingers may be set as the mute motion. In addition, a vocal command such as "Be quiet" may be set as the mute command.

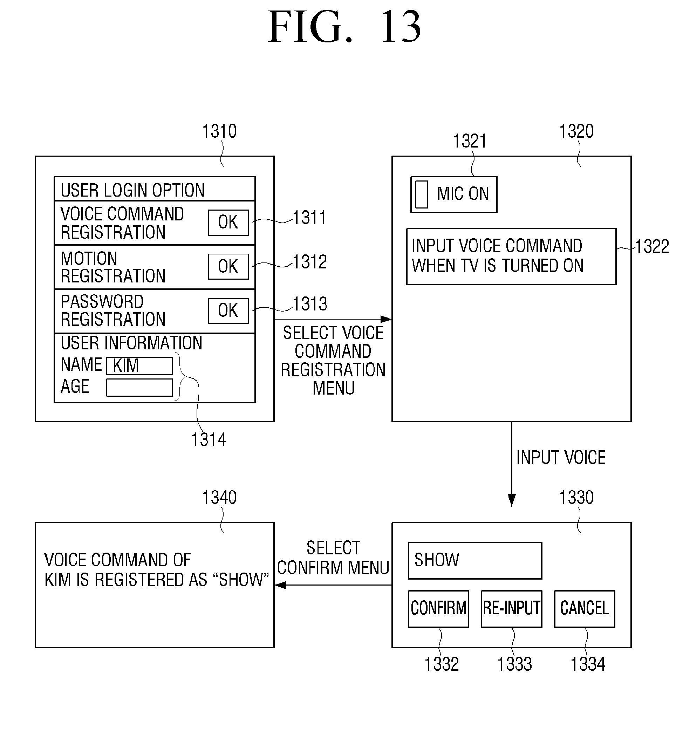

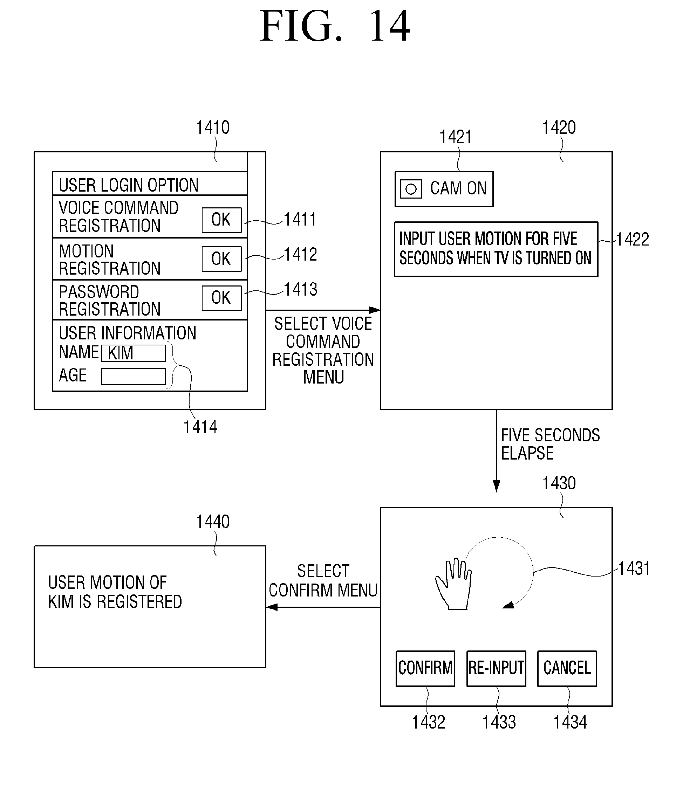

As described above, the voice command or the user motion may be randomly registered and used by the user. The voice command or the user motion may be differently set for respective control operations. FIGS. 13 and 14 are diagrams illustrating a process of registering a voice command and a motion matched with a user login operation according to exemplary embodiments.

Referring to FIG. 13, a user selects a menu for login option setting. In response, the controller 130 displays a setting image 1310 on the display 150. In this example, the setting image 1310 includes a voice command registration menu 1311, a motion registration menu 1312, a password registration menu 1313, and a user information input region 1314. The user may input unique information such a name, age, photo, birthday, gender, and the like, via the user information input region 1314. The user may select the voice command registration menu 1311 and register a voice command matched with various operations such as a login operation, and the like.

As illustrated in FIG. 13, in response to the voice command registration menu 1311 being selected, the controller 130 displays a first input image 1320 indicating the microphone is ready to receive a voice command. The first input image 1320 may include an object 1321 indicating that the microphone 110 is enabled and a message 1322 for guidance of a voice command input.

When user speaks a vocal command, the controller 130 displays a second input image 1330 including a text display region 1331 verifying the command input by the user as a text. The second input image 1330 may include a confirm menu 1332, a re-input menu 1333, a cancel menu 1334, and the like, for input completion as the text display region 1331. The user may check whether a voice command desired by the user is normally input via the text display region 1331 and select the confirm menu 1332.

When the confirm menu 1332 is selected, the controller 130 stores the voice command in the storage 140 and displays a message 1340 indicating registration of the vocal command. The controller 130 may generate the voice command input the by the user in the form of a voice file and store the voice file in the storage 140. As another example, the controller 130 may detect feature information such as frequency, amplitude, speed, and the like of the voice signal of the user who makes the voice command and store the detected feature information in the storage 140. The stored information may be used during a user recognition procedure. In addition, the controller 130 may convert the user voice command into text and may store the voice command.

As another example, when the re-input menu 1333 is selected, the controller 130 re-displays the first input image 1320 to guide the user to input a vocal command. When the cancel menu 1334 is selected, the controller 130 re-displays the setting image 1310.

FIG. 14 illustrates a setting image 1410 displayed when the user selects a menu for login option setting according to an exemplary embodiment. The setting image 1410 may have the same or a similar configuration as the setting image 1310 described in FIG. 13. In this example, when the user selects a motion registration menu 1412, the controller 130 enables the camera 120 and displays a first input image 1420. The first input image 1420 includes an object 1421 indicating that the camera 120 is enabled and a message 1422 for guidance of user motion input.

The user may input a motion for a predetermined period of time according to guidance of the message 1422. In response to the user motion being detected, the controller 130 displays a second input image 1430 identifying a captured image. The second input image 1430 may include a captured image 1431 and various menus 1432, 1433, and 1434. For example, the captured image 1431 may be displayed as a moving picture, a still image, a graphic representation, a cartoon, and the like.

The user may view the captured image 1431 and determine whether a correct motion desired by the user is photographed. In response to the motion of the user being correctly identified, the user may select a confirm menu 1432. When the confirm menu 1432 is selected, the controller 130 stores the user motion in the storage 140 and displays an image 1440 indicating completion of user motion registration. The controller 130 may store the captured image 1431 in the storage 140. The controller 130 may detect motion vector information or other feature information indicating a motion of an object included in the captured image 1431 and store the information in the storage 140. The stored feature information may be used in a user recognition procedure.

Although FIGS. 13 and 14 illustrate registration of a voice command and user motion matched with a user login operation, the voice command and the user motion may be registered in a similar method with respect to other operations.

Although FIGS. 3 and 9 illustrate examples of a user interaction method, the user interaction method may be performed via various operations.

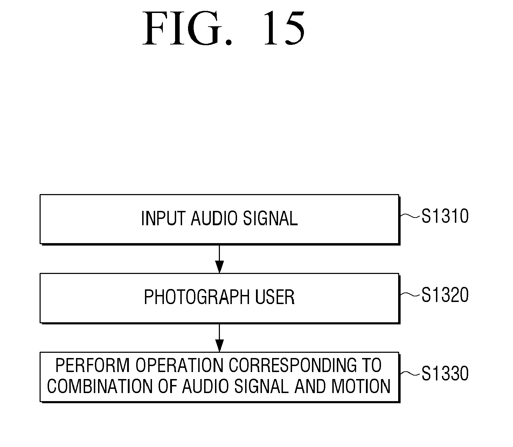

FIG. 15 is a flowchart illustrating a user interaction method according to another exemplary embodiment. Referring to FIG. 15, an audio signal caused by a user is input (S1310) and the user is photographed (S1320). Next, the audio signal and the captured image are analyzed and a control operation is performed according to the analysis result (S1330). In FIG. 15, the audio signal may be input through the microphone 110 and the user may be photographed by the camera 120. A point in time at which the microphone 110 and the camera 120 are enabled may be changed in various ways, as described above. In S1330, when the user is not a registered user or the input user motion or voice command is not a recognized predetermined user motion or voice command, a control operation may not be performed.

In some embodiments, the performed control operation may be changed in various ways. For example, if it is determined that a voice command and a user motion input from a registered user matches a turn-on operation, user login and turn-on operations may be performed.

While an alarm signal is being output, and a user motion corresponding to an undo motion is recognized and a next alarm time is detected from a voice signal, the alarm may be stopped and the next alarm time may be reset. Alternatively, a mute operation may be performed. In addition, the display apparatus 100 may perform various control operations such as a channel tuning operation, a volume control operation, an external input source changing operation, and the like, using a multimodal interaction method according to an audio signal and a user motion. In addition, as described above, the user interaction methods according to the various embodiments may be provided but flowcharts and descriptions thereof are omitted here. Although the examples herein have been described in terms of a display apparatus, the above examples are not limited to only an apparatus having a display function. For example, various embodiments may be applied to various electronic devices such as a refrigerator, an audio player, a set top box, and the like.

The exemplary embodiments may be used alone or in combination thereof. When the plural embodiments are combined, the storage 140 may store a plurality of user motions and a plurality of audio commands. For example, in response to a user motion and an audio command which match a turn-on operation and a user login operation being input, the turn-on and user login operation may be performed. As another example, in response to a mute motion and mute command which match a mute operation being input, a mute function may be executed. In addition, an undo motion may be stored in the storage 140.

The user interaction method according to the aforementioned various embodiments may be coded in software form and stored in a non-transitory readable medium. The non-transitory readable medium may be installed and used in various devices.

For example, a program code for execution of inputting an audio signal caused by a user, photographing the user, and analyzing the input audio signal and the captured image and performing a control operation according to the analysis result may be stored in a non-transitory readable medium and installed in an image forming apparatus.

The non-transitory computer readable medium is a medium that permanently or semi-permanently stores data and from which data is readable by a device, but not a medium that stores data for a short time, such as register, a cache, a memory, and the like. For example, the non-transitory computer readable medium may be a compact disc (CD), a digital versatile disc (DVD), a hard disc, a Blu-ray disc, a universal serial bus (USB), a memory card, a read only memory (ROM), and the like CD.

According to the various embodiments, a display apparatus may recognize a user using speech and motion and perform a control operation according to user intention. Accordingly, the user may conveniently and stably control the display apparatus without a remote controller. The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

## Claims

1. A display apparatus comprising:
a microphone configured to receive speech from a user;
a camera configured to capture an image of the user;
a storage configured to store registered user information; and
a controller configured to recognize whether the user is a registered user stored in the storage using at least one of the image of the user captured by the camera and the speech of the user received by the microphone, and in response to recognizing the user is the registered user, perform a control operation that matches at least one of the speech of the user and a user motion included in the image of the user.

2. The display apparatus of claim 1, wherein the controller is configured to, in response to the speech being received by the microphone, detect a feature of the speech, compare the detected feature with voice information of the registered user information stored in the storage, and determine that the user is the registered user when the detected feature matches the voice information stored in the storage.

3. The display apparatus of claim 1 or 2, wherein the controller is configured to, in response to the image being captured by the camera, detect user feature information from the image, compare the user feature information with feature information of the registered user information stored in the storage, and determine that the user is the registered user when the user feature information matches the feature information.

4. The display apparatus of any one of claims 1 to 3, wherein the controller is configured to perform a user login operation and a turn-on operation in response to a user motion and speech for turning on the display apparatus being input from the registered user while the display apparatus is turned off.

5. The display apparatus of any one of claims 1 to 4, wherein:
the microphone is maintained in an enabled state and the camera is maintained in a disabled state when the display apparatus is turned off; and the controller is configured to determine whether the speech is speech of the registered user in response to the speech being received by the microphone while the display apparatus is turned off, enable the camera to capture the image of the user in response to determining that the speech is of the registered user, and analyze the captured image to detect the user motion.

6. The display apparatus of any one of claims 1 to 5, further comprising a display configured to display a suggested pattern of motion for guiding the user motion, wherein the controller is configured to render a graphic object of the suggested pattern of motion according to a motion of the user.

7. The display apparatus of any one of claims 1 to 6, wherein the control operation comprises at least one of a turn-on operation for turning on the display apparatus, a turn-off operation for turning off the display apparatus, a user login operation, a mute operation for stopping an audio signal, and a snooze operation for stopping an alarm and resetting the alarm.

8. The display apparatus of any one of claims 1 to 7, wherein:
the camera is maintained in an enabled state and the microphone is maintained in a disabled state when the display apparatus is turned off; and the controller is configured to analyze the image when the image is captured while the display apparatus is turned off, enable the microphone to receive the speech in response to the user motion being detected from the captured image.

9. The display apparatus of any one of claims 1 to 8, further comprising a speaker,
wherein the controller is configured to output an alarm signal through the speaker in response to a predetermined alarm time being reached, and stop output of the alarm signal and reset the alarm signal according to a next alarm time in response to an undo motion being input and speech indicating the next alarm time being input from a registered user.

10. The display apparatus of any one of claims 1 to 9, further comprising a communicator configured to communicate with an external device, wherein at least one of the microphone and the camera are installed in the external device, and the communicator is configured to receive at least one of the image captured by the camera and the speech signal input through the microphone from the external device.

11. A user interaction method of a display apparatus, the method comprising:
at least one of receiving speech from a user through a microphone and capturing an image of the user with a camera; recognizing whether the user is a registered user in a storage of the display apparatus using the at least one of the image captured by the camera and the speech received through the microphone; and in response to recognizing the user is the registered user, performing a control operation of the display apparatus that matches at least one of the speech of the user and a user motion from the image.

12. The user interaction method of claim 11, wherein the recognizing comprises, in response to the speech being received, detecting a feature of the speech, comparing the detected feature with previously stored voice information of a registered user, and determining that the user is the registered user when the detected feature matches the previously stored voice information.

13. The user interaction method of claim 11 or 12, wherein the recognizing comprises, in response to the image being captured, detecting user feature information from the image, comparing the user feature information with previously stored feature information of a registered user, and determining that the user is the registered user when the user feature information matches the previously stored feature information.

14. The user interaction method of any one of claims 11 to 13, wherein the performing comprises performing a user login operation and a turn-on operation upon in response to determining that a user motion and speech for turning on the display apparatus are input from the registered user while the display apparatus is turned off.

15. The user interaction method of anyone of claims 11 to 14, further comprising:
maintaining the microphone in an enabled state and maintaining the camera in a disabled state when the display apparatus is turned off; and enabling the camera in response to the speech of the registered user being received while the display apparatus is turned off.
